# EUROPÄISCHE PATENTSCHRIFT

(11) **EP 0 764 558 B1**
(45) Veröffentlichungstag und Bekanntmachung des Hinweises auf die Patenterteilung: **07.11.2001**
(21) Anmeldenummer: 96113977.1
(22) Anmeldetag: 31.08.1996
(51) Int. Cl.: B60N 3/10

(54) **Einbau-Vorrichtung insbesondere für Fahrzeuge**
Mounting structure especially for vehicles
Structure de montage notamment pour véhicules

(30) Priorität: 20.09.1995 DE 19534840
(43) Veröffentlichungstag der Anmeldung: 26.03.1997
(73) Patentinhaber: Johnson Controls Interiors GmbH & Co. KG, 42285 Wuppertal (DE)
(72) Erfinder: Gross, Andreas, 42697 Solingen (DE); Mieglitz, Hans-Helmut, 40789 Monheim (DE); Mai, Alfred, 42499 Hückeswagen (DE)
(74) Vertreter: Zapf, Christoph, Dipl.-Ing.

(56) Entgegenhaltungen:
- EP-A- 0 337 157
- DE-A- 3 939 498
- DE-A- 4 302 948
- FR-A- 2 561 183
- GB-A- 2 209 656
- US-A- 5 297 709
- PATENT ABSTRACTS OF JAPAN vol. 016, no. 471 (M-1318), 30.September 1992 & JP 04 169337 A (TOYODA GOSEI CO LTD), 17.Juni 1992,

## Beschreibung

Die Erfindung bezieht sich auf eine Einbau-Vorrichtung, insbesondere für Fahrzeuge, mit einem zwei gegenüberliegende Seitenwände aufweisenden Gehäuse, einer Öffnung zwischen den beiden Seitenwänden, einem durch die Öffnung in das Gehäuse einschiebbaren Einsatz, einem Deckel zum Verschließen der Öffnung und Führungsmitteln an den Seitenwänden des Gehäuses und des Einsatzes, um den Einsatz aus einer Nichtgebrauchslage im Gehäuse auf einer translatorisch verschiebenden Kreisbahn in eine bereichsweise aus dem Gehäuse herausragende Gebrauchslage zu bewegen (s. zum Beispiel DE-A-43 02 948).

Derartige Einbau-Vorrichtungen finden insbesondere in Fahrzeugen z. B. als Ascher ihre Verwendung (vgl. z. B. DE 31 33 299 A1 oder DE 31 35 314 A1). Auch sind derartige Einbau-Vorrichtungen für Getränkedosen bekannt. Die US-A-5297709 offenbart beispielsweise eine Haltevorrichtung für Dosen, die in ein Armaturenbrett eines Fahrzeugs einschiebbar bzw. aus diesem herausziehbar ist. Dabei ist ein die Haltevorrichtung aufnehmendes Gehäuse derart angeordnet, dass die Haltevorrichtung, bezogen auf einem Fahrzeugboden, geradlinig schräg aufwärts aus diesem herausziehbar und anschließend in die Waagerechte umklappbar ist. Zwei an der Haltevorrichtung schwenkbar gelagerte Stützen klappen im ausgezogenen Zustand in Richtung des Fahrzeugbodens und bilden Standflächenzonen für eine Dose. Obgleich sich derartige Einbau-Vorrichtungen in der Praxis bewährt haben, stößt ihre Verwendung bei erschwerten Einbauverhältnissen oftmals auf Schwierigkeiten, insbesondere dann, wenn der Einsatz nicht wie z. B. bei einem Radio starr, sondern gleitbeweglich im Gehäuse angeordnet bzw. geführt ist. Denn oftmals ist für einen Einsatz ein geradliniger Auszug aus dem Gehäuse durch angrenzende Bauteile, wie Schaltknöpfe oder dgl. erschwert. Die Abhilfe mittels einer Mehrfachkinematik scheidet in der Regel schon aufgrund erhöhter Kosten aus.

Aufgabe der vorliegenden Erfindung ist es, eine Einbau-Vorrichtung der eingangs genannten Art zur Verfügung zu stellen, die auch bei schwierigen Einbausituationen, die keinen geradlinigen Auszug des Einsatzes aus dem Gehäuse zulassen, verwendet werden kann. Darüber hinaus soll sich die Einbau-Vorrichtung durch eine einfache, kostengünstige und nicht zuletzt auch funktionszuverlässige Gestaltung auszeichnen.

Zur Lösung dieser Aufgabe sind erfindungsgemäß die im Anspruch 1 angegebenen Maßnahmen vorgesehen, während zweckmäßige Weiterbildungen und vorteilhafte Ausgestaltungen der Erfindung in den Unteransprüchen angegeben sind.

Die Einbau-Vorrichtung, insbesondere für Fahrzeuge, ist danach erfindungsgemäß ausgebildet mit einem zwei gegenüberliegende Seitenwände aufweisenden Gehäuse, einer Öffnung zwischen den beiden Seitenwänden, einem durch die Öffnung in das Gehäuse einschiebbaren Einsatz, einer vorderseitigen Abschlußwand am Einsatz und Führungsmitteln an den Seitenwänden des Gehäuses und des Einsatzes, um den Einsatz aus einer Nichtgebrauchslage im Gehäuse auf einer translatorisch verschiebenden Kreisbahn in eine bereichsweise aus dem Gehäuse herausragende Gebrauchslage, in der die Abschlußwand im wesentlichen waagerecht ausgerichtet ist, zu bewegen.

Beim Herausziehen des Einsatzes aus dem Gehäuse, durchläuft der Einsatz eine sowohl geradlinige als zugleich auch eine bogenförmige Bewegungsbahn, so daß die in der Gebrauchslage des Einsatzes schräg im Gehäuse liegende Abschlußwand in eine im wesentlichen waagerechte Lage überführt wird und als Ablage für die unterschiedlichsten Gegenstände benutzt werden kann. Durch die für den Einsatz gegebene erfindungsgemäße Bewegungsbahn, kann dessen vorderes, der Gehäuseöffnung benachbartes Ende an einem vor der Einbau-Vorrichtung befindlichem Hindernis, z. B. in Form eines Schaltknaufs, elegant vorbeigeführt werden, was bei einem rein geradlinigen Auszug nicht möglich wäre.

Eine bevorzugte Ausführungsform der Erfindung sieht vor, daß die Seitenwände des Gehäuses je zwei sich in Schieberichtung erstreckende, ausgehend von der Öffnung nach hinten konvergierende Führungsrippen aufweisen, denen jeweils am Einsatz angelenkte Gleitstücke zugeordnet sind. Eine der an jeder Seitenwand befindlichen Führungsrippen kann parallel zu den Seitenrändern der jeweiligen Seitenwand verlaufen, wobei es sich um die obere Führungsrippe handelt, wenn der Einsatz aufwärts bewegt werden soll. Diese obere Führungsrippe bewirkt einen geradlinigen Auszug, während die dazu schräg verlaufende untere Führungsrippe für eine gleichzeitige Schwenkbewegung sorgt. Die Bewegungsbahn für den Einsatz wird durch die daran angelenkten Gleitstücke bewirkt, für deren Anlenkung jeweils ein senkrecht zur Bewegungsbahn ausgerichteter Gelenkzapfen vorgesehen ist.

In Ausgestaltung der Erfindung ist vorgesehen, daß der Einsatz eine über die Abschlußwand hinausragende Verlängerungswand mit einem daran angelenkten Deckel aufweist. Dieser Deckel verschließt die Öffnung des Gehäuses, wenn sich der Einsatz in der Nichtgebrauchslage im Gehäuse befindet.

Gemäß einer Weiterbildung der Erfindung kann der Deckel auf seiner dem Einsatz zugewandten Innenseite etwa senkrecht wegstrebend angeordnete Halterungselemente aufweisen. Hierdurch wird erreicht, daß auf der Abschlußwand des Einsatzes abgestellte Gegenstände gegen ein Herunterfallen gesichert sind.

Weiterhin kann vorgesehen sein, daß am Einsatz wenigstens eine den Deckel in Öffnungsrichtung belastende Feder angeordnet ist. Dadurch wird der Deckel stets in Öffnungslage gezwungen, wodurch auch die daran angeordneten Halterungselemente richtig positioniert sind, wenn sich der Einsatz in der Gebrauchslage befindet. An den Halterungselementen befinden sich Schließfallen, die in der Nichtgebrauchslage des Einsatzes die oberen Führungsrippen umgreifen und somit den Deckel an einer Öffnungsbewegung hindern.

Eine einfache Handhabung für die Betätigung des Einsatzes wird dadurch erreicht, daß der Deckel eine ausgeformte Griffmulde aufweist.

Die offene Gebrauchslage des Einsatzes läßt sich in Weiterbildung der Erfindung vorteilhafterweise dadurch definieren, daß der Einsatz oberseitig eine dreiseitig freigesparte Federzunge und unterseitig zumindest einen abragenden Nocken jeweils zum Einrasten in Gehäuseausnehmungen aufweist. Durch Niederdrücken der Federzunge kann die Rastung aufgehoben und der Einsatz gänzlich aus dem Gehäuse herausgezogen werden.

Die Abschlußwand kann mit Standzonenflächen ausgebildet sein, wobei es sich empfiehlt, diese aufzurauhen oder ggf. mit einem rutschfesten Belag zu versehen. Bevorzugterweise ist die erfindungsgemäße Einbau-Vorrichtung als Getränke-Dosen- oder Becher-Halter ausgebildet.

Ein Ausführungsbeispiel der Erfindung wird im folgenden anhand der Zeichnungen näher erläutert, und es zeigen:
- Fig. 1: eine schaubildliche Gesamtansicht der Einbau-Vorrichtung,
- Fig. 2: einen Längsschnitt durch die Einbau-Vorrichtung, wobei sich der Einsatz in der Nichtgebrauchslage befindet,
- Fig. 3: einen Längsschnitt durch die Einbau-Vorrichtung, wobei sich der Einsatz in der Gebrauchslage befindet und

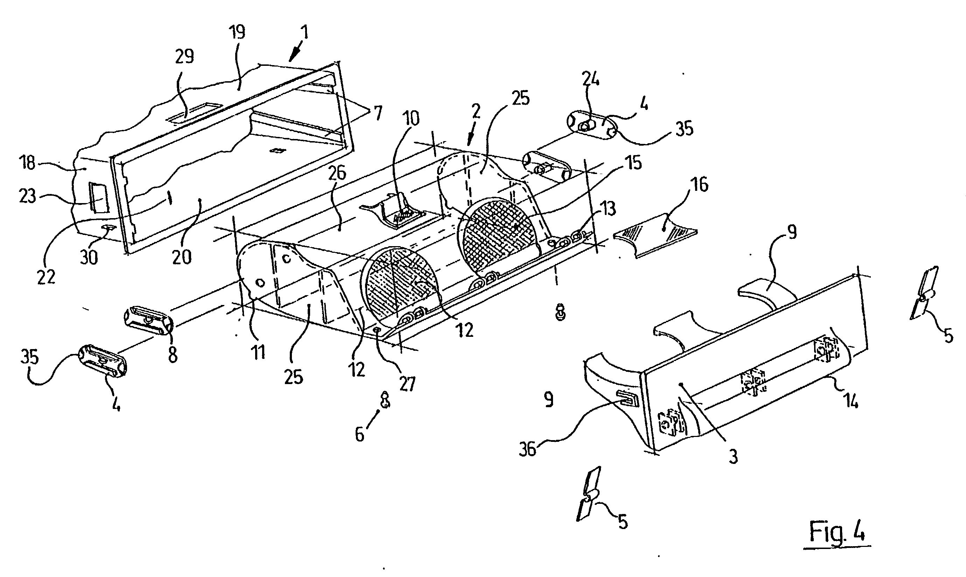

- Fig. 4: einen perspektivische Explosivdarstellung der Einbau-Vorrichtung.

Die neue Einbau-Vorrichtung ist auf der Zeichnung als Getränkedosen-Halter bzw. Becher-Halter ausgebildet. Die Einbau-Vorrichtung kann aber auch für andere Einsatzzwecke mit Vorteil Verwendung finden.

Die neue Einbau-Vorrichtung besteht aus einem Gehäuse 1 und aus einem vom Gehäuse 1 aufgenommenen Einsatz 2. Das Gehäuse 1 ist im wesentlichen rechteckig ausgebildet und weist Seitenwände 18, eine Kopfwand 19, eine Bodenwand 20 und eine hintere Endwand 21 auf. Vorderseitig ist das Gehäuse 1 mit einer Öffnung 22 versehen. Der Einbau des Gehäuses 1 in eine Armaturentafel oder dgl. eines Fahrzeugs erfolgt in üblicher Weise, wobei zur Halterung seitliche Rasthaken 23 und ggf. zusätzlich nicht gezeigte Schraubverbindungen vorgesehen sind.

Die Seitenwände 18 des Gehäuses 1 tragen jeweils zwei Führungsrippen 7, die ausgehend von der Öffnung 22 nach hinten konvergieren, wobei sich die jeweils obere Führungsrippe 7 parallel zur Kopfwand 19 erstreckt. Die Führungsrippen 7 können eine der Länge der Seitenwände 18 entsprechende Länge aufweisen.

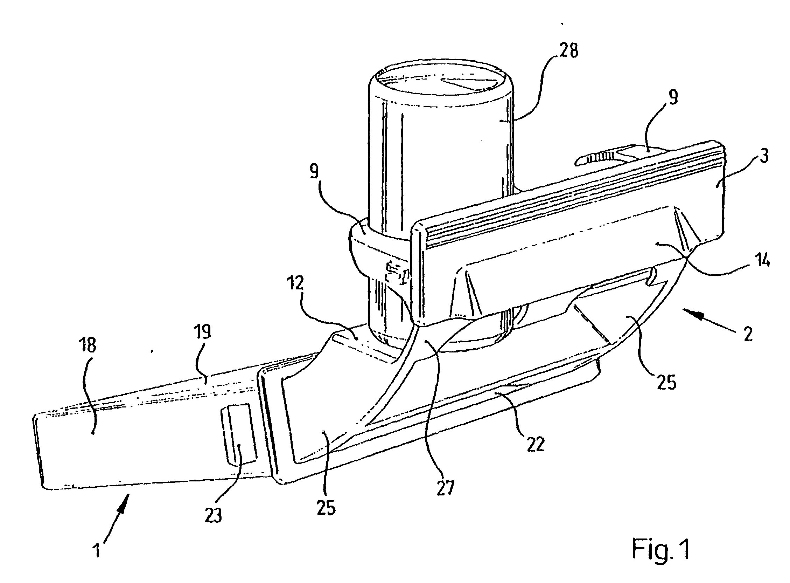

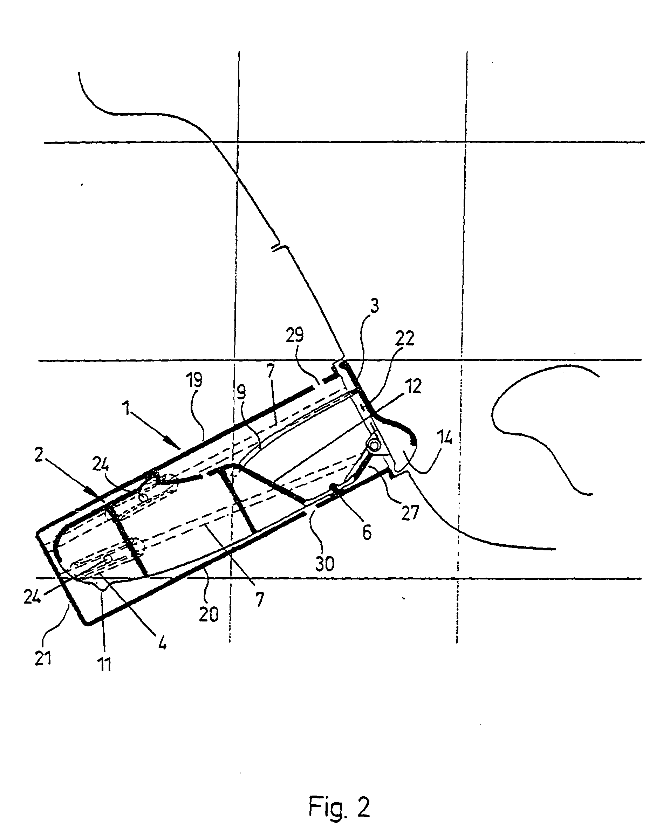

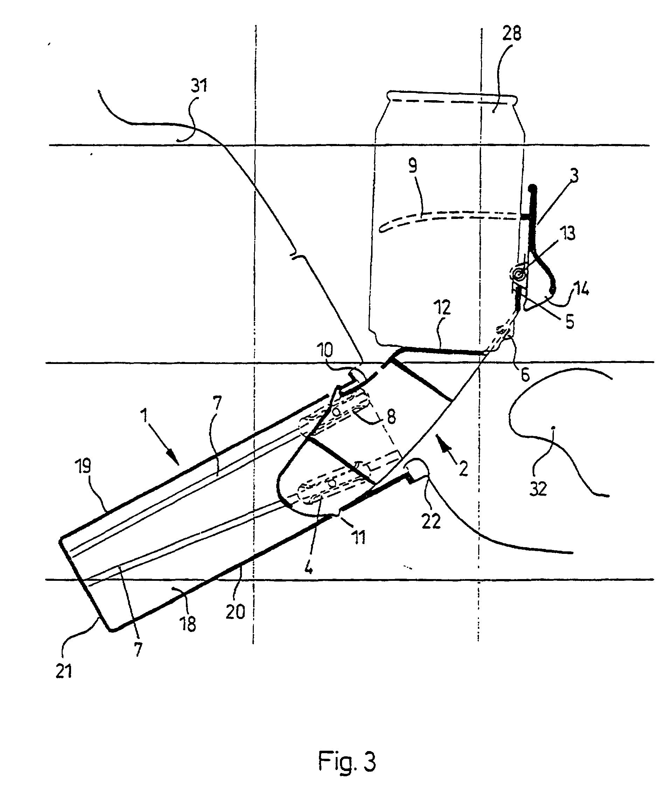

Das Gehäuse 1 nimmt den Einsatz 2 auf, und zwar in einer in Fig. 2 gezeigten Nichtgebrauchslage und in einer in Fig. 1 und 3 gezeigten Gebrauchslage. Der Einsatz 2 ist derart im Gehäuse 1 angeordnet und geführt, daß er aus der Nichtgebrauchslage auf einer translatorisch verschiebenden Kreisbahn in die bereichsweise aus dem Gehäuse 1 herausragende Gebrauchslage bewegbar ist. Die Bewegungsbahn für den Einsatz 2 wird definiert durch ein Zusammenwirken der Führungsrippen 7 am Gehäuse 1 mit am Einsatz 2 über Gelenkzapfen 24 angelenkte Gleitstücke 4.

Zunächst sei aber erwähnt, daß der Einsatz 2 über zwei Seitenwände 25, eine diese verbindende Kopfwand 26, eine vorderseitige Abschlußwand 12 und eine über die Abschlußwand hinausragende Verlängerungswand 27, an der ein Deckel 3 angelenkt ist, verfügt. Die Seitenwände 25 weisen jeweils zwei in der Höhe und in Längsrichtung der Seitenwände 25 zueinander versetzte Bohrungen für die Gelenkzapfen 24 auf. Die Gelenkzapfen 24 lagern die Gleitstücke 4, die somit drehbeweglich am Einsatz 2 sitzen. Die Gleitstücke 4 sind über Führungen 8 auf den Führungsrippen 7 geführt. Federelemente 35 an den Gleitstücken 4 wirken spiel- und toleranzausgleichend.

Am Einsatz 2 bzw. dessen Verlängerungswand 27 ist über eine Scharnierlagerstelle 13 der erwähnte Deckel 3 angelenkt. Der Deckel 3 ist durch Drehfedern 5 in Öffnungsrichtung belastet, wobei die in der Scharnierstelle 13 angeordneten Drehfedern 5 sich mit einem Schenkel am Deckel und dem anderen Schenkel an der Verlängerungswand 27 abstützen. Mit dem Deckel 3 starr verbunden sind etwa senkrecht zu diesem ausgerichtete Halterungselemente 9 zur Halterung von Getränkedosen 28, Bechern oder dgl.

Wenn sich der Einsatz 2 gemäß Fig. 2 in der Nichtgebrauchslage befindet, liegt die Abschlußwand 12 desselben in schräger Ausrichtung im Gehäuse 1. Durch Herausziehen des Einsatzes 2 aus dem Gehäuse 1, zu dessen Erleichterung der Deckel 3 eine Griffmulde 14 aufweist, wird die Abschlußwand 12 in einer aus Fig. 1 und 3 ersichtliche waagerechte Ausrichtung überführt. Beim Herausziehen des Einsatzes 2 durchlaufen nämlich die oberen Gelenkzapfen 24 eine lineare Bewegungsbahn, während die unteren Gelenkzapfen 24 zwar ebenfalls einer linearen Bewegungsbahn folgen, die aber in einem Winkel zur ersten Bewegungsbahn steht. Der Einsatz 2 wird damit um den oberen Gelenkzapfen 24 geschwenkt und gleichzeitig geradlinig aus dem Gehäuse 1 herausgezogen, so daß die hintere Einsatzkante kontinuierlich nach unten und die vordere Einsatzkante kontinuierlich nach oben bewegt wird. Die Auszugsbewegung ist beendet, wenn sich die Abschlußwand 12 in einer waagerechten Ausrichtung befindet. In dieser Stellung ist für den Einsatz 2 eine Dreipunktfixierung vorgesehen, und zwar in Form einer dreiseitig freigesparten Federzunge 10 in der Kopfwand 26 und zwei vom Einsatz 2 unterseitig abragenden Nocken 11, die in entsprechende Gehäuseausnehmungen 29, 30 einrasten.

An den Halterungselementen 9 sind Schließfallen 36 positioniert, die sich an den oberen Führungsrippen 7 abstützen, wenn sich der Einsatz 2 in der Nichtgebrauchslage befindet. Sobald die Halterungselemente 9 aus der Öffnung 22 herausgleiten, werden sie zusammen mit dem Deckel 3 durch die Drehfedern 5 in ihre Gebrauchslage gebracht.

Zum Wiedereinführen des Einsatzes 2 in das Gehäuse 1 wird ein leichter Druck auf die freie obere Kante des Deckels 3 aufgebracht, wodurch auch die Halterungselemente nach unten bewegt und leicht ins Gehäuse 1 eingeführt werden können. In der Endlage nach Fig. 2 ist für den Einsatz 2 wiederum eine Dreipunktfixierung gegeben, welche gebildet wird, aus der oberen Federzunge 10, die sich an der Kopfwand 19 des Gehäuses 1 abstützt und aus unteren Anschlagpuffern 6, die sich auf der Bodenwand 20 des Gehäuses 1 abstützen.

Die Abschlußwand 12 ist mit erhabenen Standflächenzonen 15 ausgebildet, die geriffelt oder sonstwie aufgerauht oder auch mit einem rutschfesten Belag ausgerüstet sein können. Die zwischen den Halterungselementen 9 vorgegebene Öffnungsweite kann durch Moosgummiausgleichszungen 16 variiert werden.

Das Gehäuse 1, der Einsatz 2, der Deckel 3 wie auch die Gleitstücke 4 sind vorteilhafterweise als kostengünstige Kunststoff-Spritzgußteile ausgebildet.

In den Fig. 2 und 3 ist die neue Einbau-Vorrichtung in einem inneren Fahrzeugteil 31 angeordnet, bei dem es sich um eine Armaturentafel, eine Konsole oder dgl. handeln kann. Auch ist aus Fig. 2 und 3 ersichtlich, daß sich vor der Einbau-Vorrichtung ein Schaltknauf 32 befindet, an dem der Einsatz 2 aufgrund des erfindungsgemäßen Bewegungsablaufs problemlos vorbeigleiten kann.

## Patentansprüche

1. Einbau-Vorrichtung, insbesondere für Fahrzeuge, mit
- einem zwei gegenüberliegende Seitenwände (18) aufweisenden Gehäuse (1),
- einer Öffnung (22) zwischen den beiden Seitenwänden (18),
- einem durch die Öffnung (22) in das Gehäuse (1) einschiebbaren Einsatz (2),
- einem Deckel (3) zum Verschließen der Öffnung (22) und
- Führungsmitteln an den Seitenwänden (18) des Gehäuses (1) und des Einsatzes (2), um den Einsatz (2) aus einer Nichtgebrauchslage im Gehäuse (1) auf einer translatorisch verschiebenden Kreisbahn in eine bereichsweise aus dem Gehäuse (1) herausragende Gebrauchslage zu bewegen
**dadurch gekennzeichnet, daß** am Einsatz (2) eine vorderseitige Abschlußwand (12) derart angeordnet ist, daß die Abschlußwand (12) in der Nichtgebrauchslage des Einsatzes (2) im Inneren des Gehäuses (1) und in der Gebrauchslage des Einsatzes (2) im wesentlichen waagerecht außerhalb des Gehäuses (1) ausgerichtet ist, wobei die Abschlußwand (12) mindestens eine Standflächenzone (15) aufweist und der Deckel (3) an einer über die Abschlußwand (12) hinausragenden Verlängerungswand (27) angelenkt ist, wobei die Verlängerungswand (27) mit der Abschlußwand (12) verbunden ist.

2. Einbau-Vorrichtung nach Anspruch 1,
**dadurch gekennzeichnet, daß** die Seitenwände (18) des Gehäuses (1) je zwei sich in Schieberichtung erstreckende, ausgehend von der Öffnung (22) nach hinten konvergierende Führungsrippen (7) aufweisen, denen jeweils am Einsatz (2) angelenkte Gleitstücke (4) zugeordnet sind.

3. Einbau-Vorrichtung nach Anspruch 1 oder 2,
**dadurch gekennzeichnet, daß** der Deckel (3) auf seiner dem Einsatz (2) zugewandten Innenseite etwa senkrecht wegstrebend angeordnete Halterungselemente (9) aufweist.

4. Einbau-Vorrichtung nach einem der Ansprüche 1 bis 3,
**dadurch gekennzeichnet, daß** am Einsatz (2) wenigstens eine den Deckel (3) in Öffnungsrichtung belastende Feder (5) angeordnet ist.

5. Einbau-Vorrichtung nach wenigstens einem der Ansprüche 1 bis 4,
**dadurch gekennzeichnet, daß** der Deckel (3) eine ausgeformte Griffmulde (14) aufweist.

6. Einbau-Vorrichtung nach wenigstens einem der Ansprüche 1 bis 5,
**dadurch gekennzeichnet, daß** der Einsatz (2) oberseitig eine dreiseitig freigesparte Federzunge (10) und unterseitig zumindest einen abragenden Nocken (11) jeweils zum Einrasten in Gehäuseausnehmungen (29, 30) aufweist.

7. Einbau-Vorrichtung nach wenigstens einem der Ansprüche 1 bis 6,
**dadurch gekennzeichnet, daß** dieselbe als Getränke-Dosen oder Becherhalter ausgebildet ist.

8. Einbau-Vorrichtung nach wenigstens einem der Ansprüche 1 bis 7,
**dadurch gekennzeichnet, daß** der Einsatz (2) in der Nichtgebrauchslage durch die obere Federzunge (10), die sich an einer Kopfwand (19) des Gehäuses (1) abstützt, und durch untere Anschlagpuffer (6), die sich auf einer Bodenwand (20) des Gehäuses (1) abstützen, fixiert wird.

## Claims

1. Fitted device, in particular for vehicles, having
- a housing (1) having two opposite side walls (18),
- an opening (22) between the two side walls (18),
- an insert (2) which can be inserted into the housing (1) through the opening (22),
- a cover (3) for closing the opening (22), and
- guide means on the side walls (18) of the housing (1) and the insert (2) in order to move the insert (2) from an inoperative position in the housing (1) on a circular trajectory with translatory displacement into an operative position protruding in some areas out of the housing (1),
**characterized in that** a front-side end wall (12) is arranged on the insert (2) in such a manner that in the inoperative position of the insert (2) the end wall (12) is orientated in the interior of the housing (1) and in the operative position of the insert (2) is orientated essentially horizontally outside the housing (1), the end wall (12) having at least one standing area (15) and the cover (3) being coupled to an extension wall (27) protruding over the end wall (12), the extension wall (27) being connected to the end wall (12).

2. Fitted device according to Claim 1, **characterized in that** the side walls (18) of the housing (1) in each case have two guide ribs (7) which extend in the sliding direction, converge to the rear from the opening (22) and are in each case assigned sliding elements (4) coupled to the insert (2).

3. Fitted device according to Claim 1 or 2, **characterized in that** the cover (3) has, on its inside facing the insert (2), securing elements (9) which are arranged such that they rise away approximately perpendicularly.

4. Fitted device according to one of Claims 1 to 3, **characterized in that** at least one spring (5) loading the cover (3) in the opening direction is arranged on the insert (2).

5. Fitted device according to at least one of Claims 1 to 4, **characterized in that** the cover (3) has a recessed grip (14) formed on it.

6. Fitted device according to at least one of Claims 1 to 5, **characterized in that** on the upper side the insert (2) has a spring tongue (10) which is left open on three sides and on the lower side has at least one protruding stud (11) for latching in each case into housing recesses (29, 30).

7. Fitted device according to at least one of Claims 1 to 6, **characterized in that** the said device is designed as a can or cup holder.

8. Fitted device according to at least one of Claims 1 to 7, **characterized in that** the insert (2) is fixed in the inoperative position by the upper spring tongue (10), which is supported on a top wall (19) of the housing (1), and by lower stop buffers (6) which are supported on a bottom wall (20) of the housing (1).

## Revendications

1. Structure de montage, en particulier pour véhicules, comprenant :
- un boîtier (1) présentant deux parois latérales (18) opposées,
- une ouverture (22) entre les deux parois latérales (18),
- une garniture (2) apte à être insérée dans le boîtier (1) par l'ouverture (22),
- un couvercle (3) pour fermer l'ouverture (22), et
- des moyens de guidage prévus sur les parois latérales (18) du boîtier (1) et de la garniture (2), pour déplacer sur une piste circulaire qui se déplace par translation la garniture (2) d'une position de non utilisation dans le boîtier (1) jusque dans une position d'utilisation qui déborde en partie hors du boîtier (1),
**caractérisé en ce qu'**une paroi frontale de fermeture (12) est disposée sur la garniture (2) de telle sorte que lorsque la garniture (2) est dans la position de non utilisation, la paroi de fermeture (12) est orientée à l'intérieur du boîtier (1), et que lorsque la garniture (2) est dans la position d'utilisation elle est orientée essentiellement horizontalement à l'extérieur du boîtier (1), la paroi de fermeture (12) présentant au moins une zone plane de pose (15) et le couvercle (3) étant articulé sur une paroi de prolongement (27) qui déborde au-delà de la paroi de fermeture (12), la paroi de prolongement (27) étant reliée à la paroi de fermeture (12).

2. Structure de montage selon la revendication 1, **caractérisée en ce que** les parois latérales (18) du boîtier (1) présentent deux nervures de guidage (7) qui s'étendent dans la direction de coulissement et convergent vers le bas à partir de l'ouverture (22), une pièce de coulissement (4) articulée sur la garniture (2) étant associée à chacune d'entre elles.

3. Structure de montage selon la revendication 1 ou 2, **caractérisée en ce que** sur son côté intérieur tourné vers la garniture (2), le couvercle (3) présente des éléments de retenue (9) disposés verticalement et définissant le parcours.

4. Structure de montage selon l'une des revendications 1 à 3, **caractérisée en ce que** sur la garniture (2) est disposé au moins un ressort (5) qui sollicite le couvercle (3) en direction de l'ouverture.

5. Structure de montage selon au moins l'une des revendications 1 à 4, **caractérisée en ce que** le couvercle (3) présente un creux de saisie (14) moulé.

6. Structure de montage selon au moins l'une des revendications 1 à 5, **caractérisée en ce que** la garniture (2) présente du côté supérieur une lame de ressort (10) réservée sur trois côtés et du côté inférieur au moins une came (11) en saillie, chaque fois pour l'encliquetage dans des creux (29, 30) du boîtier.

7. Structure de montage selon au moins l'une des revendications 1 à 6, **caractérisée en ce qu'**elle est configurée comme support de canette de boisson ou de verre.

8. Structure de montage selon au moins l'une des revendications 1 à 7, **caractérisée en ce que** lorsque la garniture (2) est en position de non utilisation, elle est fixée par la lame de ressort supérieure (10) qui s'appuie sur une paroi de tête (19) du boîtier (1) et par des tampons de butée inférieure (6) qui s'appuient sur une paroi de base (20) du boîtier (1).
